# EUROPÄISCHE PATENTSCHRIFT

(11) **EP 3 147 405 B1**
(45) Veröffentlichungstag und Bekanntmachung des Hinweises auf die Patenterteilung: **18.04.2018**
(21) Anmeldenummer: 16001561.6
(22) Anmeldetag: 14.07.2016
(51) Int. Cl.: D06F 67/04

(54) **VERFAHREN UND VORRICHTUNG ZUM AUSBREITEN EINES WÄSCHESTÜCKS**
METHOD AND DEVICE FOR SPREADING A LAUNDRY ITEM
MÉTHODE ET DISPOSITIF POUR ÉTALER UN ARTICLE DE LINGE

(30) Priorität: 10.09.2015 DE 102015011602
(43) Veröffentlichungstag der Anmeldung: 29.03.2017
(73) Patentinhaber: Herbert Kannegiesser GmbH, 32602 Vlotho (DE)
(72) Erfinder: Bringewatt, Wilhelm, 32457 Porta Westfalica (DE); Heinz, Engelbert, 32602 Vlotho (DE)
(74) Vertreter: Möller, Friedrich

(56) Entgegenhaltungen:
- EP-A1- 3 029 195
- EP-A2- 2 784 208
- WO-A1-2009/076958
- FR-A1- 2 810 347

## Beschreibung

Die Erfindung betrifft ein Verfahren zum Ausbreiten eines Wäschestücks gemäß dem Oberbegriff des Anspruchs 1. Des Weiteren betrifft die Erfindung eine Vorrichtung zum Ausbreiten eines Wäschestücks gemäß dem Oberbegriff des Anspruchs 8.

Zum Zuführen von Wäschestücken, wie sogenannte Flachwäsche, aber auch Kleidungsstücke, zu einer Mangel oder dergleichen, wird das jeweils zuzuführende Wäschestück mit gegenüberliegenden Ecken einer Seitenkante manuell in Eingabeklammern einer Eingabeeinrichtung eingeführt. Nach anschließendem Verfahren der Eingabeklammern wird das Wäschestück weiter an Spreizklammern einer Spreizeinrichtung übergeben. Die Spreizklammern, die jeweils einen Eckbereich der gegenüberliegenden Ecken des Wäschestücks halten, werden quer zu einer Zuführrichtung verfahren, so dass das jeweilige Wäschestück durch Straffung eines sich zwischen den von den Klammern gehaltenen Ecken befindlichen oberen Randes auseinandergespreizt wird. Das derart auseinandergebreitete Wäschestück wird sodann auf einem Zuführförderer oder auf einer Ablegeleiste abgelegt. Von da aus wird das Wäschestück der Mangel oder dergleichen zugeführt.

In der EP 3 029 195 A1 wird beschrieben, beim Auseinanderfahren der Spreizklammern das Wäschestück an den einer Kante zugeordneten Eckbereichen derart auseinanderzuziehen, dass ein Durchhang dieser Kante minimiert wird. Durch dieses Ausbreiten oder Spreizen des Wäschestücks kann es an den von den Spreizklammern ergriffenen Eckbereichen des Wäschestücks zu Verformungen bzw. zu einer "Ohrenbildung" kommen. Diese "Ohrenbildung" bzw. Vergrößerung der Eckbereiche ist zumeist irreversibel und führt langfristig zu einer Schädigung der Wäschestücke bzw. zum Reißen. Da sich diese Verformung der Eckbereiche auf die Form des gesamten Wäschestücks übertragen kann, führt dies zu einem unbefriedigenden Behandlungsergebnis des Wäschestücks. Abgesehen davon, dass diese Aufweitung des Wäschestücks langfristig zur Zerstörung des Wäschestücks führt, ist diese "Ohrenbildung", insbesondere bei Flachwäschestücken, wie beispielsweise Tischdecken, unerwünscht.

Die Aufgabe der vorliegenden Erfindung besteht nun darin, ein Verfahren und eine Vorrichtung der eingangs genannten Art zu schaffen, womit in einer die Wäschestücke schonenden Weise eine leistungsfähige Zuführung von Wäschestücken gewährleistet ist.

Ein Verfahren zur Lösung dieser Aufgabe weist die Maßnahmen des Anspruchs 1 auf. Demnach ist es erfindungsgemäß vorgesehen, dass mindestens ein von einer Spreizklammer ergriffener Eckbereich des Wäschestücks während des Ausbreitens des Wäschestücks von einer bildgebenden Einrichtung erfasst wird. Dieses Erfassen des ergriffenen Eckbereichs durch die bildgebende Einrichtung kann kontinuierlich oder taktweise mit einer vorzugebenden Frequenz erfolgen. Dabei ist es vorgesehen, dass nur ein von einer Spreizklammer ergriffener Eckbereich von einer bildgebenden Einrichtung erfasst wird oder zwei von jeweils einer Spreizklammer ergriffene Eckbereiche durch jeweils eine bildgebende Einrichtung erfasst oder mehrere von jeweils einer Spreizklammer ergriffene Eckbereiche durch jeweils eine bildgebende Einrichtung erfasst werden. Die bildgebende Einrichtung erzeugt eine Konturaufnahme des Eckbereichs, ein Foto oder eine sonstige Abbildung eines Eckbereichs. Dadurch kann während des gesamten Ausbreitungsvorgangs die Form bzw. die fortlaufende Verformung des mindestens einen von einer Spreizklammer ergriffenen Eckbereichs kontrolliert, und der von der bildgebenden Einrichtung aufgenommene Eckbereich mit vorgegebenen Referenzen verglichen werden, sowie das Ausbreiten des Wäschestücks gestoppt werden, sobald der Eckbereich in seiner Form von einer vorgegebenen Referenz für einen Eckbereich abweicht.

Insbesondere kann es weiter vorgesehen sein, den Vergleich durch eine Steuereinrichtung vorzunehmen und das Ausbreiten des Wäschestücks zu stoppen, sobald die Form des Eckbereichs außerhalb eines Toleranzbereichs der vorgegebenen Referenz liegt. Dazu wird auf der Steuereinrichtung eine Vielzahl möglicher Referenzen für Eckbereiche hinterlegt. Je nach Anforderungen an den Behandlungsprozess können für jede Referenz verschiedene Toleranzbereiche definiert werden. Während des Ausbreitens werden die durch die bildgebende Einrichtung aufgenommenen Abbilder des mindestens einen Eckbereichs quasi zeitgleich mit vorgegebenen bzw. vorbestimmten Referenzen durch die Steuereinrichtung verglichen. Wird während des Ausbreitens der Eckbereich dermaßen verformt, dass er von einer vorgegebenen Referenz abweicht, wird das Ausbreiten des Wäschestücks durch die Spreizeinrichtung unterbrochen.

Es kann jedoch auch vorgesehen sein, dass auf der Steuereinrichtung Referenzen hinterlegt sind, die verformte Eckbereiche abbilden. In diesem Fall wird das Ausbreiten des Wäschestücks unterbrochen, sobald eine durch die bildgebende Einrichtung aufgenommene Abbildung der Eckbereiche mit den Referenzen übereinstimmen bzw. in einen Toleranzbereich der Referenz fällt. Auf diese Weise wird vermieden, dass durch übermäßiges Spreizen bzw. Ausbreiten des Wäschestücks sich an selbigem Aufweitungen oder "Ohren" bilden, die die Behandlungsqualität des Wäschestücks mindern.

Bevorzugt kann es die vorliegende Erfindung weiter vorsehen, dass ein Abstand zwischen einer äußeren Kante des durch die Spreizklammer ergriffenen Eckbereichs des Wäschestücks und einer angrenzenden Seitenkante des Wäschestücks ermittelt wird, insbesondere dieser Abstand durch eine Steuereinrichtung anhand von Bildern der Eckbereiche, die während des Spreizens von der bildgebenden Einrichtung erfasst werden, ermittelt wird und von einem Überschreiten eines Grenzwerts das Ausbreiten des Wäschestücks gestoppt wird. Je stärker das Wäschestück gespreizt wird, desto größer ist der Abstand zwischen dem äußeren Rand des Eckbereichs und der angrenzenden Seitenkante des Wäschestücks. Erfindungsgemäß kann ein bestimmter Abstandswert mit einem gewissen Toleranzbereich vorgegeben werden, der für das Ausbreiten des Wäschestücks noch tolerierbar ist. Sobald dieser vorgegebene Wert für den Abstand überschritten wird, stoppt die Steuereinrichtung das Ausbreiten des Wäschestücks. Dieser Abstand bzw. Toleranzbereich kann in Abhängigkeit von dem jeweiligen auszubreitenden Wäschestück bzw. von der Größe und der Art oder Qualität des Wäschestücks individuell eingestellt werden.

Ein Weiteres bevorzugtes Ausführungsbeispiel der vorliegenden Erfindung kann es vorsehen, dass von mindestens einem Sensor, insbesondere einer Sensorleiste, die zwischen zwei durch jeweils eine Spreizklammer ergriffene Eckbereiche einer Kante des Wäschestücks positioniert ist, ein Durchhang des Wäschestücks während des Ausbreitens ermittelt wird. Dabei kann der mindestens eine Sensor derart positioniert sein, dass er, sobald er durch das sich ausbreitende Wäschestück verdeckt wird, den Spreizvorgang abbricht. In dieser Stellung ist das Wäschestück vollständig oder nahezu vollständig ausgebreitet. Durch die Verwendung einer Sensorleiste kann der Fortschritt des Ausbreitens ermittelt werden, indem nacheinander die einzelnen Sensoren auf der Sensorleiste durch das Wäschestück abgedeckt werden. Mittels dieses mindestens einen Sensors bzw. der Sensorleiste lässt sich der Durchhang des Wäschestücks bestimmen, bzw. festlegen wie groß der Durchhang sein darf.

Die vorliegende Erfindung kann es weiter vorsehen, dass das Wäschestück von den Spreizklammern ausgebreitet wird, bis ein vorbestimmter Wert für den Durchhang des Wäschestücks erreicht wird oder der mindestens eine durch die bildgebende Einrichtung aufgenommene Eckbereich des Wäschestücks von einer vorgegebenen Referenz abweicht oder der Abstand zwischen der äußeren Kante des erfassten Bereichs und der angrenzenden Seitenkante des Wäschestücks einen vorgegebenen Grenzwert überschreitet. Demnach können dem Verfahren verschiedene Bedingungen beigeordnet werden, unter denen das Ausbreiten des Wäschestücks unterbrochen wird. Sobald eine der genannten Bedingungen eintritt, wird das Spreizen des Wäschestücks gestoppt. Auf diese Weise wird vermieden, dass durch Auseinanderfahren der Spreizklammern "Ohren" an den Eckbereichen entstehen. Gleichermaßen wird gewährleistet, dass das Wäschestück vollständig ausgebreitet wird, wenn es nicht zu einer Ausweitung bzw. "Ohrenbildung" an den Eckbereichen kommt.

Des Weiteren kann es die vorliegende Erfindung vorsehen, dass das Wäschestück gemäß eines Kompromisses zwischen einem vorbestimmten Wert für den Durchhang und einer Abweichung einer Form eines Eckbereichs von einer Referenz ausgebreitet wird. Demgemäß ist sowohl für den Durchhang als auch für die Abweichung von der Referenz ein Toleranzbereich vorgesehen, in dessen Rahmen das Wäschestück ausgebreitet werden kann. Dadurch wird ein Mittelmaß zwischen einem möglichst geringen Durchhang und einer möglichst geringen Ausbildung von "Ohren" gewährleistet. Durch diesen Kompromiss wird das Wäschestück effektiv ausgebreitet, ohne dass es dabei zu sehr beansprucht wird.

Ein Weiteres vorteilhaftes Ausführungsbeispiel des Verfahrens kann es vorsehen, dass vor dem Ausbreiten des Wäschestücks dessen Breite ermittelt und anschließend das Wäschestück durch die Spreizklammern vollständig ausgebreitet wird, vorausgesetzt der mindestens eine durch die bildgebende Einrichtung erfasste Eckbereich des Wäschestücks weicht nicht von dem vorgegebenen Referenzwert ab. Zur Bestimmung der Breite des Wäschestücks kann beispielsweise ein Messstab die zwischen den beiden von den Spreizklammern gehaltenen Eckbereichen liegende Seitenkante derart nach unten drücken, dass das Wäschestück zwischen den Spreizklammern und dem Messstab gespannt wird. Mittels der Positionen der Spreizklammern und des Messstabes kann sodann die Breite des Wäschestücks ermittelt werden. In Abhängigkeit von diesem ermittelten Wert für die Breite bewegen sich die Spreizklammern entsprechend nach außen. Wenn während dieses Spreizens des Wäschestücks durch die Steuereinrichtung eine Abweichung eines Eckbereichs von einem vorgegebenen Referenzwert festgestellt wird, wird das Spreizen unterbrochen. Auch bei diesem Ausführungsbeispiel wird ein Verfahren geschaffen, bei dem das Wäschestück effektiv ausgebreitet wird, ohne es nachhaltig zu beschädigen.

Eine Vorrichtung zur Lösung der der Erfindung zugrunde liegenden Aufgabe weist die Merkmale des Anspruchs 8 auf. Demnach ist es vorgesehen, dass den Spreizklammern jeweils eine bildgebende Einrichtung zugeordnet ist zum Erfassen eines von einer Spreizklammer gehaltenen Eckbereichs des Wäschestücks. Bei dieser bildgebenden Einrichtung kann es sich beispielsweise um eine Digitalkamera, ein Array oder eine Matrix von Sensoren zur Bestimmung einer Kontur, oder mehreren Abstandssensoren handeln. Dabei kann die bildgebende Einrichtung direkt den Spreizklammern zugeordnet sein, oder in einem gewissen Abstand auf einen vorbestimmten Bereich ausgerichtet sein. Die bildgebende Einrichtung ist mit einer Steuereinrichtung verbunden, auf der eine Vielzahl von Referenzen für einen Vergleich mit den von den Spreizklammern erfassten Eckbereichen des Wäschestücks gespeichert sind. Diese Referenzen entsprechen verschiedenen Eckbereichen verschiedener Wäschestücke, die unterschiedliche Größen und Materialien aufweisen. Je nach dem welche Art Wäschestück behandelt wird, ist es so möglich, entsprechende Referenzformen zu verwenden.

Weiter kann es erfindungsgemäß vorgesehen sein, dass zwischen den das Wäschestück haltenden Spreizklammern mindestens ein Sensor, vorzugsweise eine Sensorleiste, zur Bestimmung eines Durchhangs des Wäschestücks positioniert ist, wobei der mindestens eine Sensor, vorzugsweise die Sensorleiste mit der Steuereinrichtung verbunden ist. Bei diesen Sensoren kann es sich beispielsweise um Photozellen handeln, die bei einer Abschattung ein Signal erzeugen.

Darüber hinaus kann es insbesondere vorgesehen sein, dass zwischen den das Wäschestück haltenden Spreizklammern eine Messeinrichtung zur Bestimmung der Breite des Wäschestücks positioniert ist, wobei die Messeinrichtung mit der Steuereinrichtung verbunden ist. Diese Messeinrichtung kann beispielsweise einen Messstab aufweisen, der die Kante zwischen den beiden durch die Spreizklammern gehaltenen Eckbereiche durch eine Abwärtsbewegung strafft. Durch die Position der Spreizklammern sowie des Messstabs ist die Breite des Wäschestücks bestimmbar.

Ein bevorzugtes Ausführungsbeispiel der erfindungsgemäßen Vorrichtung und des Verfahrens werden nachfolgend anhand der Zeichnung näher erläutert. In dieser zeigen:
- Fig. 1: eine Spreizeinrichtung mit einem Wäschestück in einer Ausgangsstellung,
- Fig. 2: die Spreizeinrichtung mit dem teilweise gespreiztem Wäschestück,
- Fig. 3: die Spreizeinrichtung gemäß den Fig. 1 und 2 mit einem vollständig gespreizten Wäschestück,
- Fig. 4: die Spreizeinrichtung gemäß den vorherigen Figuren mit einem Sensor,
- Fig. 5: die Spreizeinrichtung gemäß den Fig. 1 bis 3 mit einer Sensorleiste,
- Fig. 6: die Spreizeinrichtung gemäß den vorherigen Figuren mit zwei bildgebenden Einrichtungen, und
- Fig. 7: eine Spreizeinrichtung gemäß eines weiteren Ausführungsbeispiels.

Zum Zuführen eines Wäschestücks 10 an beispielsweise einen Zuführförderer wird das Wäschestück 10 von einer Eingabeeinrichtung an eine Spreizeinrichtung 11 übergeben. Durch die Spreizeinrichtung 11 wird sodann das Wäschestück 10 durch zwei Spreizklammern 12, 13 ausgebreitet und in diesem ausgebreiteten Zustand an den Zuführförderer übergeben.

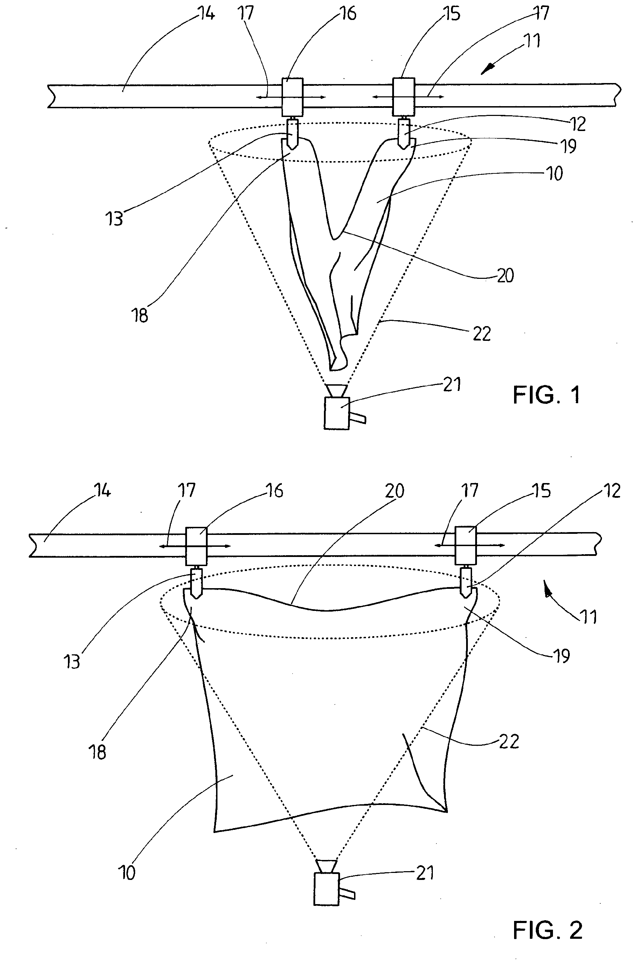

In Fig. 1 ist eine Spreizeinrichtung 11 stark schematisiert und vereinfacht dargestellt. Die Spreizeinrichtung 11 weist eine Schiene 14 auf, auf der zwei Schlitten 15, 16 entlang einer Spreizrichtung 17 auf der Schiene 14 auseinander- und zusammenfahrbar gelagert sind. Die Schlitten 15, 16 weisen jeweils eine Spreizklammer 12, 13 auf. Mit diesen Spreizklammern 12, 13 kann das Wäschestück 10 ergriffen und durch auseinanderfahren der Schlitten 15, 16 entlang der Schiene 14 ausgebreitet werden.

Bei dem in der Fig. 1 dargestellten Ausführungsbeispiel haben die Spreizklammern 12, 13 das Wäschestück 10 an zwei benachbarten Eckbereichen 18, 19 ergriffen. Dabei hängt bei der in Fig.1 dargestellten Ausgangsstellung eine Kante 20 des Wäschestücks 10 zwischen den Eckbereichen 18 und 19 nach unten durch. Den Abstand zwischen dem tiefsten Punkt der Kante 20 und einem höchsten, dem vollständig ausgebreiteten Wäschestück 10 entsprechenden Punkt wird als Durchhang des Wäschestücks 10 bezeichnet.

Der Gegenstand der vorliegenden Erfindung besteht im Wesentlichen darin, mindestens einen der Eckbereiche 18, 19 während des Ausbreitens des Wäschestücks 10 von einer bildgebenden Einrichtung zu erfassen. Bei dem in der Fig. 1 dargestellten Ausführungsbeispiel der vorliegenden Erfindung wird ein oberer Bereich des Wäschestücks 10, welcher beide Eckbereiche 18, 19 umfasst, von einer Kamera 21 erfasst. Der Bildausschnitt der Kamera 21 ist hier schematisiert durch einen elliptischen, gepunkteten Kegelstumpf 22 dargestellt. Bei der erfindungsgemäßen bildgebenden Einrichtung kann es sich jedoch auch um ein Array oder eine Matrix von einzelnen Sensoren bzw. Abstandssensoren handeln, die beim Durchgang eines Objektes, bzw. eines Eckbereichs 18, 19, ein Signal erzeugen, so dass die Kontur des Wäschestücks 10 während des Ausbreitens desselben abgebildet wird.

Die Kamera 21 ist mit einer nicht dargestellten Steuereinrichtung oder dergleichen verbunden. Über die Steuereinrichtung wird mittels der Kamera 21 während des Ausbreitens des Wäschestücks 10 kontinuierlich ein Abbild mindestens eines Eckbereichs 18, 19 erzeugt. Es ist jedoch auch denkbar, dass die Aufnahme des mindestens einen Eckbereichs 18, 19 durch die Kamera 21 taktweise mit einer vorzugebenden Frequenz erfolgt. Dadurch wird durch die bildgebende Einrichtung, bzw. durch die Kamera 21, ein fortlaufendes Abbild der Eckbereiche 18, 19 während des Ausbreitens des Wäschestücks 10 erstellt.

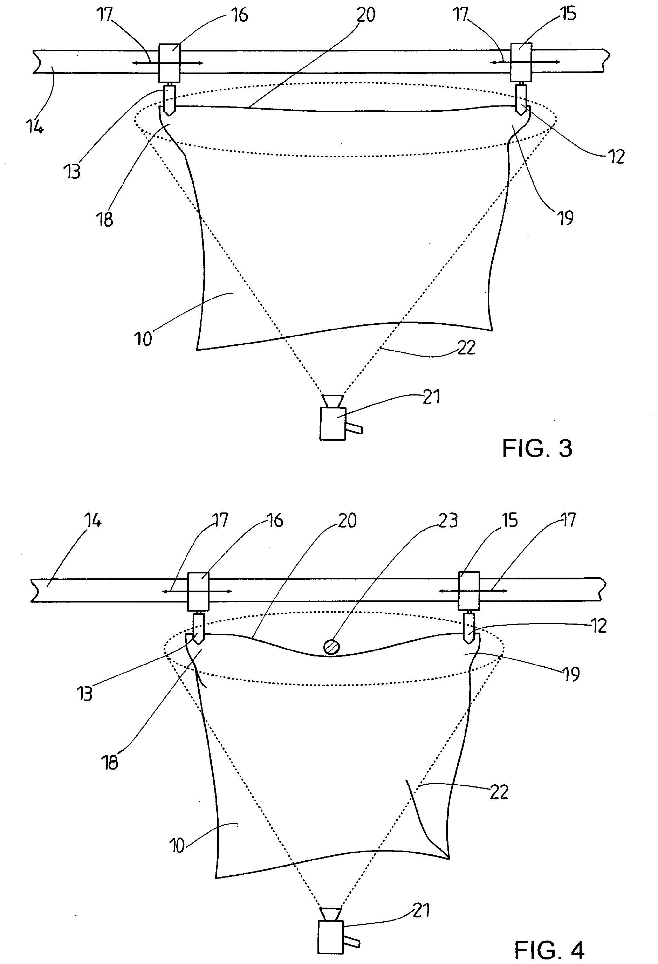

Durch das Auseinanderfahren der Schlitten 15, 16 wird das Wäschestück 10, insbesondere die Kante 20 zwischen den Eckbereichen 18, 19 gespannt und somit das gesamte Wäschestück 10 ausgebreitet (Fig. 2). Durch dieses Aufspannen des Wäschestücks 10 kann sich an den Eckbereichen 18, 19 das Wäschestück gegenüber seiner rechteckigen Grundform verformen. Diese "Ohrenbildung" oder Aufweitung der Eckbereiche 18, 19 ist in den Fig. 2 und 3 ansatzweise dargestellt. Insbesondere in der Fig. 3, in der das Wäschestück 10 vollständig ausgebreitet dargestellt ist, sind die Eckbereiche 18, 19 deutlich im Vergleich zu einer rechteckigen Ausgangsform des Wäschestücks 10 aufgweitet. Diese Aufweitung oder "Ohrenbildung" an den Eckbereichen 18, 19 gilt es erfindungsgemäß zu vermeiden, da dies zu einem qualitativ minderen Ergebnis der Wäschebehandlung und langfristig gar zu einer Schädigung des Wäschestücks 10 führen kann.

Um dies zu verhindern, werden die durch die Kamera 21 während des Ausbreitens erfassten Abbilder der Eckbereiche 18, 19 mit Referenzbildern verglichen. Diese Referenzbilder oder Referenzformen von Eckbereichen verschiedener Wäschestücke sind auf der Steuereinheit gespeichert. Diese Referenzformen stellen Idealbilder von entsprechenden Eckbereichen dar. Sobald die von der Kamera 21 aufgenommenen Bilder der Eckbereiche 18, 19 von den Referenzformen abweichen, wird der Prozess des Spreizens bzw. des Ausbreitens gestoppt. Es kann erfindungsgemäß auch vorgesehen sein, dass den Referenzformen ein Toleranzbereich zugesprochen wird, indem sich eine Abweichung der erfassten Form der Eckbereiche 18, 19 bewegen kann, ohne dass der Ausbreitevorgang unterbrochen wird. Somit wird bei einem festgestellten Abweichen der Eckbereiche 18, 19 von einer Referenzform das Ausbreiten des Wäschestücks 10 auch unterbrochen, wenn dieses noch nicht vollständig ausgebreitet ist. Auf diesem Wege wird das Wäschestück 10 zwar in einem nicht vollständig ausgebreiteten Zustand an den folgenden Zuführförderer übergeben, gleichzeitig wird jedoch auch das übermäßige Aufweiten bzw. die "Ohrenbildung" an den Eckbereichen 18, 19 unterbunden.

Zusätzlich zum Erfassen der Eckbereiche 18, 19 durch die Kamera 21 kann der Durchhang der Kante 20 während des Auseinanderfahrens der Spreizklammern 12, 13 mittels eines Sensors 23 ermittelt werden (Fig. 4). Dieser Sensor 23 ist zwischen den beiden Spreizklammern 12, 13 positioniert und sendet ein Signal an beispielsweise die Steuereinrichtung aus, sobald er von der Kante 20 des Wäschestücks 10 abgedeckt wird. Durch Positionierung des Sensors 23 auf verschiedene Höhen zwischen den Spreizklammern 12, 13 kann somit ein gewisser Durchhang der Kante 20 detektiert werden. Sobald der Sensor 23 von der Kante 20 verdeckt wird, wird durch die Steuereinheit ein Signal erzeugt, so dass ein voreingestellter Durchhang der Kante 20 erreicht wird und das Ausbreiten des Wäschestücks 10 gestoppt werden kann. Wenn vor dem Erreichen eines bestimmten Durchhangs die Form der Eckbereiche 18, 19 bereits von einer Referenzform über die Maßen abweicht, erfolgt bereits ein Stoppsignal für den Ausbreitevorgang. Wird der Sensor 23 durch die Kante 20 abgedeckt, bevor es zu einer übermäßigen Aufweitung der Eckbereiche 18, 19 kommt, kann das Wäschestück 10 in einem ausreichend ausgebreiteten Zustand an den Zuführförderer übergeben werden, ohne dass dabei die Eckbereiche 18, 19 zu stark strapaziert werden.

Alternativ zu dem in der Fig. 4 dargestellten Sensor 23 ist es außerdem erfindungsgemäß denkbar, dass der Durchhang der Kante 20 mittels einer Sensorleiste 24 gemessen wird. Mittels dieser Sensorleiste 24, welche eine Vielzahl von einzelnen Sensoren aufweist, kann der Durchhang der Kante 20 während des Auseinanderfahrens der Spreizklammern 12, 13 quasikontinuierlich bestimmt werden. Durch diese quasikontinuierliche Bestimmung des Durchhanges des Wäschestücks 10 kann das selbige durch die Steuereinrichtung gemäß einem vorzugebenden Kompromiss zwischen einem Durchhang des Wäschestücks 10 und einer Aufweitung der Eckbereiche 18, 19 ausgebreitet werden.

Für den Fall, dass eine übermäßige Aufweitung der Eckbereiche 18, 19 festgestellt wird, bevor ein geforderter minimaler Durchhang der Kante 20 erreicht wurde, kann es erfindungsgemäß vorgesehen sein, dass die Spreizklammern 12, 13 innerhalb eines Toleranzbereichs für die Aufweitung der Eckbereiche 18, 19 weiter auseinander bewegt werden, um vorzugebende Minimalanforderungen an den Durchhang zu erfüllen. Durch einen derartigen Kompromiss können auch noch Wäschestücke 10 an den Zuführförderer übergeben werden, bei denen eine Aufweitung der Eckbereiche 18, 19 schon weit fortgeschritten ist. Falls die Aufweitung der Eckbereiche 18, 19 auch den hinnehmbaren Toleranzbereich übertrifft, ist das Wäschestück 10 auszusondern. Wenn der minimal geforderte Durchhang vor einer Aufweitung der Eckbereiche 18, 19 erreicht wird, ist kein Kompromiss einzugehen. Die Vorgaben derartiger Bedingungen bzw. Auswahlkriterien können über die Steuereinrichtung vorgegeben werden.

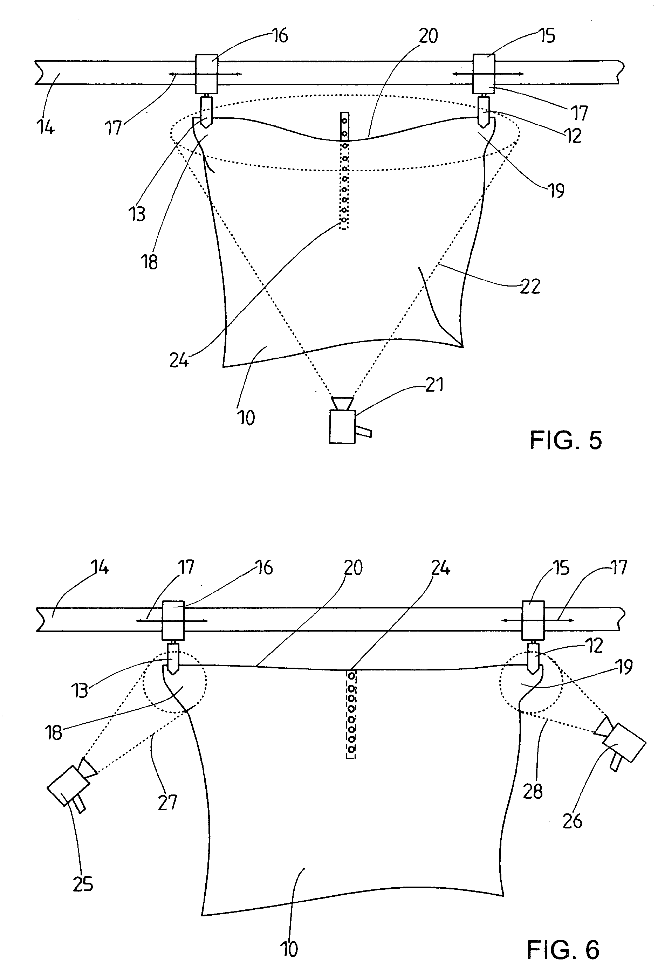

Alternativ zum Erfassen der Eckbereiche 18, 19 durch eine einzige Kamera 21 kann es erfindungsgemäß auch vorgesehen sein, dass jeder Eckbereich 18, 19 durch eine einzelne Kamera 25, 26 erfasst wird. Bei dem in der Fig. 6 dargestellten Ausführungsbeispiel der vorliegenden Erfindung ist der Sichtbereich der Kameras 25, 26 jeweils durch einen gepunkteten Kegelstumpf 27, 28 schematisiert dargestellt. Bei diesem Ausführungsbeispiel wird gerade nur der Eckbereich 18 bzw. 19 des gesamten Wäschestücks 10 erfasst und auf eventuelle Aufweitungen der Eckbereiche 18, 19 hin untersucht. Es kann darüber hinaus vorgesehen sein, dass an die beiden Eckbereiche 18, 19 unterschiedliche Bedingungen bzgl. der Aufweitung gestellt werden bzw. die Aufweitungen an den Eckbereichen 18, 19 unterschiedlich stark ausfallen.

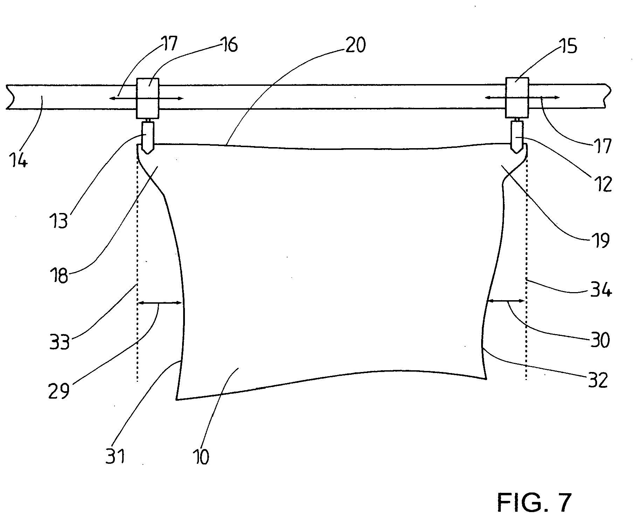

Ein weiteres Ausführungsbeispiel der vorliegenden Erfindung kann es vorsehen, die Aufweitung der Eckbereiche 18, 19 durch eine Bestimmung der Abstände 29, 30 zwischen einer äußeren Kante der Eckbereiche 18, 19 und angrenzenden Seitenkanten 31, 32 des Wäschestücks 10 zu bestimmen (Fig. 7). Dazu werden genau wie bei den vorherigen Ausführungsbeispielen die Eckbereiche 18, 19 und zusätzlich die Seitenkanten 31, 32 paarweise oder zusammen durch eine nicht dargestellte bildgebende Einrichtung erfasst. Bei dieser bildgebenden Einrichtung kann es sich wiederrum um eine Kamera 21 oder ein Array bzw. eine Matrix von einzelnen Sensoren handeln. Durch die Steuereinrichtung wird sodann der Abstand 30, 31 zwischen den Seitenkanten 31, 32 und einer senkrecht von den Eckbereichen 18, 19 nach unten gerichteten Hilfslinie 33, 34 bestimmt. Sobald ein Wert für den Abstand 29 und/oder für den Abstand 30 von einem vorzugebenden Grenzwert abweicht bzw. überschritten ist, wird der Ausbreitungsvorgang unterbrochen. Da der Wert des Abstandes 29, 30 ein direktes Maß für den Grad der Aufweitung der Eckbereiche 18, 19 darstellt, bietet dieses Verfahren ebenso effizient wie das zuvor ausgeführte Ausführungsbeispiel eine Möglichkeit eine "Ohrenbildung" zu vermeiden. Darüber hinaus ist es natürlich ebenso denkbar, dass diese Abstandsbestimmung im Zusammenspiel mit einem Sensor 23 oder einer Sensorleiste 24 zur Bestimmung des Durchhanges erfolgt.

### Bezugszeichenliste:

- 10: Wäschestück
- 11: Spreizeinrichtung
- 12: Spreizklammer
- 13: Spreizklammer
- 14: Schiene
- 15: Schlitten
- 16: Schlitten
- 17: Spreizrichtung
- 18: Eckbereich
- 19: Eckbereich
- 20: Kante
- 21: Kamera
- 22: Kegelstumpf
- 23: Sensor
- 24: Sensorleiste
- 25: Kamera
- 26: Kamera
- 27: Kegelstumpf
- 28: Kegelstumpf
- 29: Abstand
- 30: Abstand
- 31: Seitenkante
- 32: Seitenkante
- 33: Hilfslinie
- 34: Hilfslinie

## Patentansprüche

1. Verfahren zum Ausbreiten eines Wäschestücks (10), wobei das Wäschestück (10) von mindestens zwei Spreizklammern (12, 13) einer Spreizeinrichtung (11) an zwei benachbarten Eckbereichen (18, 19) einer Kante (20) ergriffen und ausgebreitet wird, bevor es auf einem Zuführförderer oder einer diesem zugeordneten Ablegeleiste abgelegt wird, **dadurch gekennzeichnet, dass** mindestens ein von einer Spreizklammer (12, 13) ergriffener Eckbereich (18, 19) des Wäschestücks (10) während des Ausbreitens des Wäschestücks (10) von einer bildgebenden Einrichtung erfasst wird, der von der bildgebenden Einrichtung aufgenommene Eckbereich (18, 19) mit vorgegebenen Referenzen für einen Eckbereich (18, 19) verglichen wird und das Ausbreiten des Wäschestücks (10) gestoppt wird, sobald der Eckbereich (18, 19) in seiner Form von einer vorgegebenen Referenz für einen Eckbereich (18, 19) abweicht.

2. Verfahren nach Anspruch 1, **dadurch gekennzeichnet, dass** der aufgenommene Eckbereich (18, 19) durch eine Steuereinrichtung mit vorgegebenen Referenzen verglichen wird, und das Ausbreiten des Wäschestücks (10) gestoppt wird, sobald die Form des Eckbereichs (18, 19) außerhalb eines Toleranzbereichs der vorgegebenen Referenz liegt.

3. Verfahren nach Anspruch 1 oder 2, **dadurch gekennzeichnet, dass** ein Abstand (29, 30) zwischen einer äußeren Kante des durch die Spreizklammer (12, 13) ergriffenen Eckbereichs (18, 19) des Wäschestücks (10) und einer angrenzenden Seitenkante (31, 32) des Wäschestücks (10) ermittelt wird, insbesondere dieser Abstand (29, 30) durch eine Steuereinrichtung anhand von Bildern der Eckbereiche (18, 19), die während des Spreizens von der bildgebenden Einrichtung erfasst werden, ermittelt wird und bei einem Überschreiten eines Grenzwertes das Ausbreiten des Wäschestücks (10) gestoppt wird.

4. Verfahren nach einem der vorhergehenden Ansprüche, **dadurch gekennzeichnet, dass** von mindestens einem Sensor (23), insbesondere einer Sensorleiste (24), die zwischen zwei durch jeweils eine Spreizklammer (12, 13) ergriffene Eckbereiche (18, 19) einer Kante (20) des Wäschestücks (10) positioniert ist, ein Durchhang des Wäschestücks (10) während des Ausbreitens ermittelt wird.

5. Verfahren nach einem der vorhergehenden Ansprüche, **dadurch gekennzeichnet, dass** das Wäschestück (10) von den Spreizklammern (12, 13) ausgebreitet wird, bis ein vorbestimmter Wert für den Durchhang des Wäschestücks (10) erreicht wird oder der mindestens eine durch die bildgebende Einrichtung aufgenommene Eckbereich (18, 19) des Wäschestücks (10) von einer vorgegebenen Referenz abweicht oder der Abstand (29, 30) zwischen der äußeren Kante des erfassten Eckbereichs und der angrenzenden Seitenkante (31, 32) des Wäschestücks (10) einen vorgegebenen Grenzwert überschreitet.

6. Verfahren nach einem der vorhergehenden Ansprüche, **dadurch gekennzeichnet, dass** das Wäschestück (10) gemäß eines Kompromisses zwischen einem vorbestimmten Wert für den Durchhang und einer Abweichung einer Form des Eckbereichs (18, 19) von einer Referenz ausgebreitet wird.

7. Verfahren nach einem der vorhergehenden Ansprüche, **dadurch gekennzeichnet, dass** vor dem Ausbreiten des Wäschestücks (10) dessen Breite ermittelt wird und anschließend das Wäschestück (10) durch die Spreizklammern (12, 13) vollständig ausgebreitet wird, vorausgesetzt der mindestens eine durch die bildgebende Einrichtung erfasste Eckbereich (18, 19) des Wäschestücks (10) weicht nicht von dem vorgegebenen Referenzwert ab.

8. Vorrichtung zum Ausbreiten eines Wäschestücks (10) mit mindestens zwei Spreizklammern (12, 13) zum Halten jeweils eines Eckbereiches (18, 19) des Wäschestücks (10), wobei die Spreizklammern (12, 13) auseinander- und zusammenfahrbar sind, **dadurch gekennzeichnet, dass** den Spreizklammern (12, 13) jeweils eine bildgebende Einrichtung zugeordnet ist zum Erfassen eines von einer Spreizklammer (12, 13) gehaltenen Eckbereichs (18, 19) des Wäschestücks (10) und die bildgebende Einrichtung mit einer Steuereinrichtung verbunden ist, auf der eine Vielzahl von Referenzen für einen Vergleich mit den von den Spreizklammern (12, 13) erfassten Eckbereichen (18, 19) des Wäschestücks (10) gespeichert sind, und das Ausbreiten des Wäschestücks (10) beendbar ist, sobald der Eckbereich (18, 19) in seiner Form von einer vorgegebenen Referenz für einen Eckbereich (18, 19) abweicht.

9. Vorrichtung nach Anspruch 8, **dadurch gekennzeichnet, dass** die bildgebende Einrichtung eine Kamera (21, 25, 26) oder eine Anordnung von einzelnen Sensoren ist.

10. Vorrichtung nach Anspruch 8 oder 9, **dadurch gekennzeichnet, dass** zwischen den das Wäschestück (10) haltenden Spreizklammern (12, 13) mindestens ein Sensor (23), vorzugsweise eine Sensorleiste (24), zur Bestimmung eines Durchhangs des Wäschestücks (10) positioniert ist, wobei der mindestens eine Sensor (23), vorzugsweise die Sensorleiste (24), mit der Steuereinrichtung verbunden ist.

11. Vorrichtung nach einen der Ansprüche 8 bis 10, **dadurch gekennzeichnet, dass** zwischen den das Wäschestück (10) haltenden Spreizklammern (12, 13) eine Messeinrichtung zur Bestimmung der Breite des Wäschestücks (10) positioniert ist, wobei die Messeinrichtung mit der Steuereinrichtung verbunden ist.

## Claims

1. Method for spreading a laundry item (10), the laundry item (10) being gripped at two adjacent corner regions (18, 19) of an edge (20) by at least two spreader clips (12, 13) of a spreader device (11) and spread, before being placed on a feed conveyor or laying strip assigned to the latter, **characterized in that** at least one corner region (18, 19) of the laundry item (10) that is gripped by a spreader clip (12, 13) is captured by an imaging means as the laundry item (10) is being spread, the corner region (18, 19) captured by the imaging means is compared with predefined references for a corner region (18, 19) and the spreading of the laundry item (10) is stopped as soon as the corner region (18, 19) differs in shape from a predefined reference for a corner region (18, 19).

2. Method according to claim 1, **characterized in that** the captured corner region (18, 19) is compared with predefined references by a control means and the spreading of the laundry item (10) is stopped as soon as the shape of the corner region (18, 19) lies outside a tolerance range of the predefined reference.

3. Method according to claim 1 or 2, **characterized in that** a distance (29, 30) between an outer edge of the corner region (18, 19) of the laundry item (10), that is gripped by the spreader clip (12, 13), and an adjoining lateral edge (31, 32) of the laundry item (10) is determined, in particular this distance (29, 30) is determined by a control means on the basis of images of the corner regions (18, 19) that are captured by the imaging means during the spreading operation, and the spreading of the laundry item (10) is stopped in the case of a limit value being exceeded.

4. Method according to any one of the preceding claims, **characterized in that** a sag of the laundry item (10) is determined, during the spreading operation, by at least one sensor (23), in particular a sensor strip (24), which is positioned between two corner regions (18, 19) of an edge (20) of the laundry item (10) that are each gripped by a spreader clip (12, 13).

5. Method according to any one of the preceding claims, **characterized in that** the laundry item (10) is spread by the spreader clips (12, 13) until a predetermined value for the sag of the laundry item (10) is attained, or the at least one corner region (18, 19) of the laundry item (10) that is captured by the imaging means deviates from a predefined reference, or the distance (29, 30) between the outer edge of the captured corner region and the adjoining lateral edge (31, 32) of the laundry item (10) exceeds a predefined limit value.

6. Method according to any one of the preceding claims, **characterized in that** the laundry item (10) is spread according to a compromise between a predefined value for the sag and a deviation of a shape of a corner region (18, 19) from a reference.

7. Method according to any one of the preceding claims, **characterized in that**, before the laundry item (10) is spread, its width is determined, and the laundry item (10) is then spread fully by the spreader clips (12, 13), provided that the at least one corner region (18, 19) of the laundry item (10) that is captured by the imaging means does not deviate from the predefined reference value.

8. Device for spreading a laundry item (10), having at least two spreader clips (12, 13) for holding, respectively, a corner region (18, 19) of the laundry item (10), the spreader clips (12, 13) being able to be moved apart and towards each other, **characterized in that** there is an imaging means assigned to each of the spreader clips (12, 13), for capturing a corner region (18, 19) of the laundry item (10) that is held by a spreader clip (12, 13), and the imaging means is connected to a control means, on which there are stored a multiplicity of references for a comparison with the corner regions (18, 19) of the laundry item (10) that are gripped by the spreader clips (12, 13), and the spreading of the laundry item (10) can be ended as soon as the corner region (18, 19) differs in shape from a predefined reference for a corner region (18, 19).

9. Device according to claim 8, **characterized in that** the imaging means is a camera (21, 25, 26) or an arrangement of individual sensors.

10. Device according to claim 8 or 9, **characterized in that** at least one sensor (23), preferably a sensor strip (24), for determining a sag of the laundry item (10) is positioned between the spreader clips (12, 13) holding the laundry item (10), the at least one sensor (23), preferably the sensor strip (24), being connected to the control means.

11. Device according to any one of claims 8 to 10, **characterized in that** a measuring means for determining the width of the laundry item (10) is positioned between the spreader clips (12, 13) holding the laundry item (10), the measuring means being connected to the control means.

## Revendications

1. Procédé pour étaler une pièce de linge (10), dans lequel on saisit et on étale la pièce de linge (10) avec au moins deux pinces d'écartement (12, 13) d'un dispositif d'écartement (11) à deux régions de coin voisines (18, 19) d'un côté (20), avant qu'elle soit déposée sur un transporteur d'alimentation ou sur une barre de dépôt associée à celui-ci, **caractérisé en ce que** l'on détecte au moins une région de coin (18, 19) de la pièce de linge (10) saisie par une pince d'écartement (12, 13) pendant l'étalement de la pièce de linge (10) au moyen d'un dispositif d'imagerie, on compare la région de coin (18, 19) détectée par le dispositif d'imagerie à des références prédéterminées pour une région de coin (18, 19), et on arrête l'étalement de la pièce de linge (10), dès que la région de coin (18, 19) s'écarte par sa forme d'une référence prédéterminée pour une région de coin (18, 19).

2. Procédé selon la revendication 1, **caractérise en ce que** l'on compare la région de coin détectée (18, 19) à des références prédéterminées au moyen d'un dispositif de commande, et on arrête l'étalement de la pièce de linge (10) dès que la forme de la région de coin (18, 19) se situe à l'extérieur de la zone de tolérance de la référence prédéterminée.

3. Procédé selon la revendication 1 ou 2, **caractérise en ce que** l'on détermine une distance (29, 30) entre un côté extérieur de la région de coin (18, 19) de la pièce de linge (10) saisie par les pinces d'écartement (12, 13) et un côté latéral adjacent (31, 32) de la pièce de linge (10), en particulier on détermine cette distance (29, 30) au moyen d'un dispositif de commande à l'aide d'images des régions de coin (18, 19), qui sont détectées pendant l'étalement par le dispositif d'imagerie, et on arrête l'étalement de la pièce de linge (10) lors d'un dépassement d'une valeur limite.

4. Procédé selon l'une quelconque des revendications précédentes, **caractérisé en ce que** l'on détermine une flèche de la pièce de linge (10) pendant l'étalement au moyen d'au moins un capteur (23), en particulier d'une rampe de capteurs (24), qui est positionné(e) entre deux régions de coin (18, 19) d'un côté (20) de la pièce de linge (10) saisies respectivement par une pince d'écartement (12, 13).

5. Procédé selon l'une quelconque des revendications précédentes, **caractérisé en ce que** l'on étale la pièce de linge (10) au moyen des pinces d'écartement (12, 13), jusqu'à ce qu'une valeur prédéterminée pour la flèche de la pièce de linge (10) soit atteinte ou que ladite au moins une région de coin (18, 19) de la pièce de linge (10) détectée par le dispositif d'imagerie s'écarte d'une référence prédéterminée ou que la distance (29, 30) entre le côté extérieur de la région de coin détectée et le côté latéral adjacent (31, 32) de la pièce de linge (10) dépasse une valeur limite prédéterminée.

6. Procédé selon l'une quelconque des revendications précédentes, **caractérisé en ce que** l'on étale la pièce de linge (10) selon un compromis entre une valeur prédéterminée pour la flèche et un écart d'une forme de la région de coin (18, 19) par rapport à une référence.

7. Procédé selon l'une quelconque des revendications précédentes, **caractérisé en ce qu'**avant l'étalement de la pièce de linge (10) on détermine sa largeur et on étale ensuite complètement la pièce de linge (10) au moyen des pinces d'écartement (12, 13), en supposant que ladite au moins une région de coin (18, 19) de la pièce de linge (10) détectée par le dispositif d'imagerie ne s'écarte pas de la valeur de référence prédéterminée.

8. Dispositif pour étaler une pièce de linge (10) avec au moins deux pinces d'écartement (12, 13) pour maintenir respectivement une région de coin (18, 19) de la pièce de linge (10), dans lequel les pinces d'écartement (12, 13) peuvent être écartées et rapprochées l'une de l'autre, **caractérisé en ce qu'**un dispositif d'imagerie est respectivement associé aux pinces d'écartement (12, 13) pour détecter une région de coin (18, 19) de la pièce de linge (10) maintenue par une pince d'écartement (12, 13) et le dispositif d'imagerie est relié à un dispositif de commande, sur lequel sont mémorisées une multiplicité de références pour une comparaison avec des régions de coin (18, 19) de la pièce de linge (10) maintenues par les pinces d'écartement (12, 13), et l'étalement de la pièce de linge (10) peut être arrêté, dès que la région de coin (18, 19) s'écarte par sa forme d'une référence prédéterminés pour une région de coin (18, 19).

9. Dispositif selon la revendication 8, **caractérise en ce que** le dispositif d'imagerie est une caméra (21, 25, 26) ou un agencement de capteurs individuels.

10. Dispositif selon la revendication 8 ou 9, **caractérisé en ce qu'**au moins un capteur (23), de préférence une rampe de capteurs (24), est positionné(e) entre les pinces d'écartement (12, 13) maintenant la pièce de linge (10), pour la détermination d'une flèche de la pièce de linge (10), dans lequel ledit au moins un capteur (23), de préférence la rampe de capteurs (24), est relié(e) au dispositif de commande.

11. Dispositif selon l'une quelconque des revendications 8 à 10, **caractérisé en ce qu'**un dispositif de mesure est positionné entre les pinces d'écartement (12, 13) maintenant la pièce de linge (10) pour la détermination de la largeur de la pièce de linge (10), dans lequel le dispositif de mesure est relié au dispositif de commande.
